# EUROPEAN PATENT APPLICATION

(11) **EP 4 224 120 A1**
(43) Date of publication of application: **09.08.2023**
(21) Application number: 23155234.0
(22) Date of filing: 06.02.2023
(51) Int. Cl.: G01F 23/00, G01F 23/28, G01F 23/284, G01F 23/296

(54) **SYSTEMS AND METHODS FOR MONITORING CONTENTS IN AN ASSET**

(30) Priority: 06.02.2022 US 202263307138 P; 03.02.2023 US 202318105611
(71) Applicant: Independent Technologies, LLC, Blair Nebraska 68008 (US)
(72) Inventor: SIEGFRIED, Tim, Atwater, 56209 (US); KONZELMANN, Andreas, New London, 56273 (US); STROTT, Douglas B., Henniker, 03242 (US); MITCHELL, Michael, Ennis, 75119 (US); MEEK, Adam, Trinity, 34655 (US); HADDY, John Richard, Lane Cove West, 2066 (AU)
(74) Representative: Stevens Hewlett & Perkins

(57) **Abstract**

A system compatible with an aperture of an asset, the apparatus for monitoring the contents of an asset, the system removable from the aperture including: a housing including a first connection interface on an exterior surface of the housing; a sensor contained within the housing; a lens contained within the housing; a power supply coupled to the sensor; an adaptor including a second connection interface configured to removably, lockably mate with the first connection interface, the adapter including a bottom end removably connectable with the aperture of the asset, wherein the aperture of the asset is substantially sealed upon insertion of the bottom end therein. A method of monitoring the contents of an asset comprising the steps of: installing an adaptor in an asset aperture; installing a sensor assembly into the adaptor; and fastening the sensor assembly to the adaptor to create a sensor apparatus.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright whatsoever.

### CROSS-REFERENCE TO RELATED APPLICATIONS

This application claims the benefit of the U.S. provisional patent application entitled "Systems and Methods for Sensing Levels in Containers" having serial no. 63/307,138, filed February 6, 2022, which is hereby incorporated by reference in its entirety as if fully set forth herein.

### BACKGROUND OF THE INVENTION

Embodiments of the present invention generally relate to systems and methods for monitoring contents in an asset via sensors capable of releasably coupling to an asset receptacle. More specifically, embodiments of the present invention generally relate to systems and methods for monitoring contents in an asset via a sensor alone or in combination with an adaptor, the sensor and/or adaptor capable of releasably coupling to an asset receptacle.

Contents in an asset may include fuels that are gaseous at standard ambient temperature and pressure ("gas fuels") including, but not limited to, methane, ethane, propane, butane, pentane, and mixtures of two or more of these hydrocarbons. Standard ambient temperature and pressure is 25 deg. C and 101kPa. Gas fuels may also comprise small amounts of other gases including propylene, butylenes, and additives including, for example, odorant gasses in the form of ethanethiol, tetrahydrothiophene, or amyl mercaptan for the detection of gas leaks. Contents may also include liquid chemicals, powders, grains, granulated material in between the kerosene and the fuel oil, etc.

Gas fuels may be compressed to form a liquefied gas fuel. For example, butane, propane, and fuels containing mixtures of these hydrocarbons may be sold as liquefied petroleum gas or liquid propane gas, either of which may be abbreviated to LPG. A liquefied gas fuel may be stored in an asset, examples of which include but are not limited to, pressure vessels such as cylinders and tanks. Tanks may include, for example, LPG bulk storage tanks ("LPG bullet tanks") and liquefied natural gas storage tanks.

Within an asset such as a pressure vessel, an interface exists between the product (e.g., liquefied gas fuel) and the vapor thereof. The vapor is located above the liquefied gas fuel and within an upper part of the pressure vessel. A vapor outlet in the form of a vapor outlet valve assembly may be attached to the upper part of the pressure vessel.

The quantity of liquefied gas fuel within a pressure vessel may be determined using a mechanical liquid-level gauge in the form of a float-level gauge such as those manufactured by Rochester, Taylor, and Cotrako. The float-level gauge typically comprises a float connected to a stem via a movable joint, and a head from which the stem depends. The level float-gauge penetrates a pressure vessel wall, and the head is externally attached thereto with bolts that pass through bolt passageways to a flange or other suitable mount that is integrated with the pressure vessel, for example by welds or screws. A seal that surrounds the penetrating stem may be sandwiched between the head and a flange integrated with the pressure vessel wall. The float follows the interface between the liquefied gas fuel and the vapor thereof. A magnet located at the head is operationally coupled to the float. Movement of the float is transmitted to the magnet via a gear system at the joint. Vertical movement of the float is transformed to a rotation of the magnet at the head, and consequently a rotation of the magnet's magnetic field. The magnet is mounted to rotate around the stem axis. Generally, the magnetic field may be followed by a uservisible external needle, the orientation of which may indicate the height of the float and the interface that the float follows. The use of the magnet enables measurement of the quantity of liquefied gas fuel within the pressure vessel while maintaining a high strength seal, enhancing safety. Other pressure vessels may be fitted with a pressure gauge for determining the quantity of fluid therein. When a user observes that the gauge indicates that the contents within the pressure vessel is low, the user may contact a gas supply company to refill the pressure vessel with liquefied gas fuel.

While the description above specifically mentions liquefied gas fuel, liquid chemicals, powders, grains, and granulated material in between the kerosene and the fuel oil, the description may generally apply for any suitable type of product (e.g., a liquid) within a vessel that may or may not be pressurized including, but not limited to, liquefied ammonia, cryogenic liquids including liquefied natural gas and liquefied permanent gases, and refined petroleum products including petrol, kerosene, and fuel oil.

### BRIEF SUMMARY OF THE INVENTION

Briefly stated, in one aspect of the present invention, systems and methods for monitoring contents in assets are provided.

Disclosed herein is a system compatible with an aperture of an asset, the apparatus for monitoring the contents of an asset, the system removable from the aperture, including: a housing including at least one first connection interface on an exterior surface of the housing; a sensor contained within the housing; a lens contained within the housing; a power supply coupled to the sensor; an adaptor, the adaptor including at least one second connection interface configured to removably, lockably mate with the at least one first connection interface, the adapter including a bottom end removably connectable with the aperture of the asset, wherein the aperture of the asset is substantially sealed upon insertion of the bottom end therein.

Also disclosed herein is a method of monitoring the contents of an asset comprising the steps of: installing an adaptor in an asset aperture; installing a sensor assembly into the adaptor; and fastening the sensor assembly to the adaptor to create a sensor apparatus.

### BRIEF DESCRIPTION OF THE SEVERAL VIEWS OF THE DRAWINGS

The foregoing summary, as well as the following detailed description of preferred embodiments of the invention, will be better understood when read in conjunction with the appended drawings. For the purpose of illustrating the invention, there is shown in the drawings embodiments which are presently preferred. It should be understood, however, that the invention is not limited to the precise arrangements and instrumentalities shown. In the drawings:
Fig. 1A depicts a perspective view of a sensor assembly coupled to an adaptor in accordance with one embodiment of the present invention;
Fig. 1B depicts an exploded view of a sensor apparatus in accordance with one embodiment of the present invention;
Fig. 1C depicts a top view of the sensor assembly of Fig. 1A in accordance with one embodiment of the present invention;
Fig. 2 depicts a cross-sectional view of the sensor assembly of Fig. 1A taken along lines 2-2 of Fig. 1C in accordance with one embodiment of the present invention;
Figs.3A-3C depict a method of installing a sensor apparatus in accordance with one embodiment of the present invention;
Fig. 4 depicts a perspective view of the adaptor of Fig. 1A in accordance with one embodiment of the invention;
Fig. 5A depicts a top view of the adaptor of Fig. 1A in accordance with one embodiment of the present invention;
Fig. 5B depicts a cross-sectional view of the adaptor of Fig. 1A taken along lines 5B-5B of Fig. 5A in accordance with one embodiment of the present invention;
Fig. 6A depicts a top view of the lower body section of the sensor assembly coupled to the plug, cabling, sensor, and adaptor, in accordance with one embodiment of the present invention;
Fig. 6B depicts a cross-sectional view of the lower body section of Fig. 1B taken along lines 6B-6B of Fig. 6D in accordance with one embodiment of the present invention;
Fig. 6C depicts a bottom view of the lower body section of the sensor assembly coupled to the bottom seal in accordance with one embodiment of the present invention;
Fig. 6D depicts a top view of the lower body section of the sensor assembly in accordance with one embodiment of the present invention;
Fig. 7A depicts a top view of the upper body section of the sensor assembly coupled to the label in accordance with one embodiment of the present invention;
Fig. 7B depicts a bottom view of the upper body section of the sensor assembly in accordance with one embodiment of the present invention;

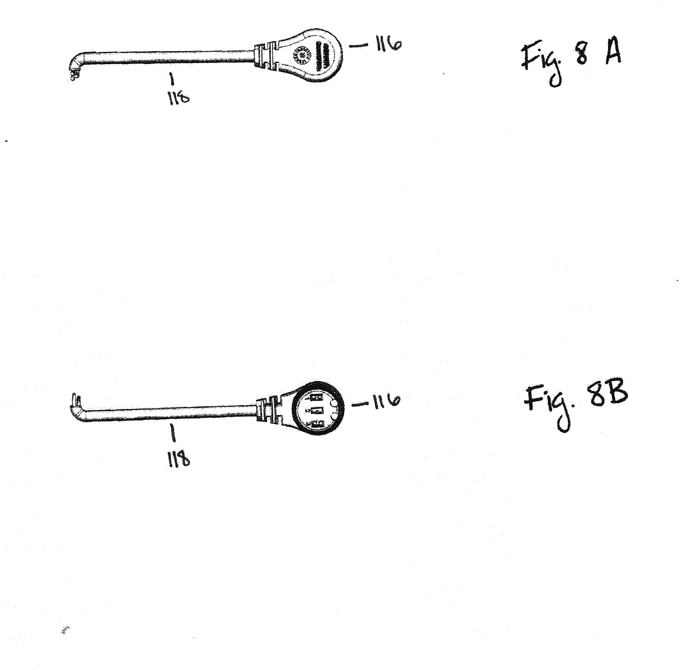

Fig. 8A depicts a top view of the plug and cabling in accordance with one embodiment of the present invention;
Fig. 8B depicts a bottom view of the plug and cabling in accordance with one embodiment of the present invention;
Fig. 9A depicts a bottom view of the upper body section of the sensor assembly coupled to the sensor of the sensor assembly and the housing seal in accordance with one embodiment of the present invention; and

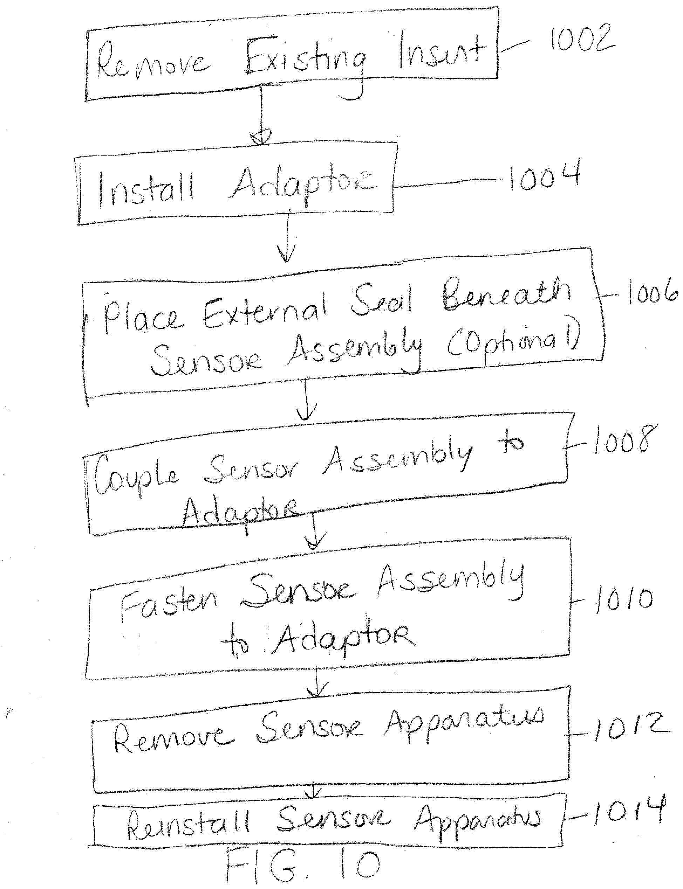

Fig. 10 depicts a method of installing the sensor apparatus and subsequent removal and re-installation of the sensor assembly in accordance with one embodiment of the present invention.

### DETAILED DESCRIPTION OF THE INVENTION

The description that follows describes, illustrates, and exemplifies one or more embodiments of an asset monitoring system. This description is not provided to limit the disclosure to the embodiments described herein, but rather to explain and teach various principles to enable one of ordinary skill in the art to understand these principles and, with that understanding, be able to apply them to practice not only the embodiments described herein, but also other embodiments that may come to mind in accordance with these principles. The scope of the instant disclosure is intended to cover all such embodiments that may fall within the scope of the appended claims, either literally or under the doctrine of equivalents.

Certain terminology may be used in the following description for convenience only and is not limiting. The words "lower" and "upper" and "top" and "bottom" designate directions in the drawings to which reference is made. The terminology includes the words above specifically mentioned, derivatives thereof and words of similar import.

Although the invention or elements thereof may by described in terms of vertical, horizontal, transverse (lateral), longitudinal, and the like, it should be understood that variations from the absolute vertical, horizontal, transverse, and longitudinal are also deemed to be within the scope of the invention.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent, or semipermanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

Where a term is provided in the singular, the inventors also contemplate aspects of the invention described by the plural of that term. As used in this specification and in the appended claims, the singular forms "a", "an" and "the" include plural references unless the context clearly dictates otherwise, e.g., "a fastener" may include a plurality of fastener. Thus, for example, a reference to "a method" includes one or more methods, and/or steps of the type described herein and/or which will become apparent to those persons skilled in the art upon reading this disclosure.

Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, the preferred methods, constructs, and materials are now described. All publications mentioned herein are incorporated herein by reference in their entirety. Where there are discrepancies in terms and definitions used in references that are incorporated by reference, the terms used in this application shall have the definitions given herein.

For simplicity and clarity of illustration, the drawing figures illustrate the general manner of construction, and descriptions and details of well-known features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The present invention relates to mechanical and electro-mechanical sensors, transducers, and other monitoring devices, and adapters and other interface devices. More particularly, the invention relates to a system for connecting a sensor of a variety of types to an asset that holds a variety of contents. The invention relates to an asset monitoring system, apparatus and method for easily and releasably coupling a sensor and/or adaptor to an asset via an existing asset aperture. The invention is also suitable for enabling easy and efficient attachment and detachment of a sensor such as a liquid level sensor to the fill port of a liquid asset, with or without use of an adaptor. The invention facilitates easy removal and reinstallation of the sensor when filling the asset with contents, e.g., chemicals, oils, lubricants, and fuels. The invention may minimize the time required to install, remove, and re-install the sensor. The techniques of the invention can also be used in other embodiments utilizing a variety of sensors, assets, asset apertures, and contents (liquid, gas and/or solids) without departing from the scope hereof.

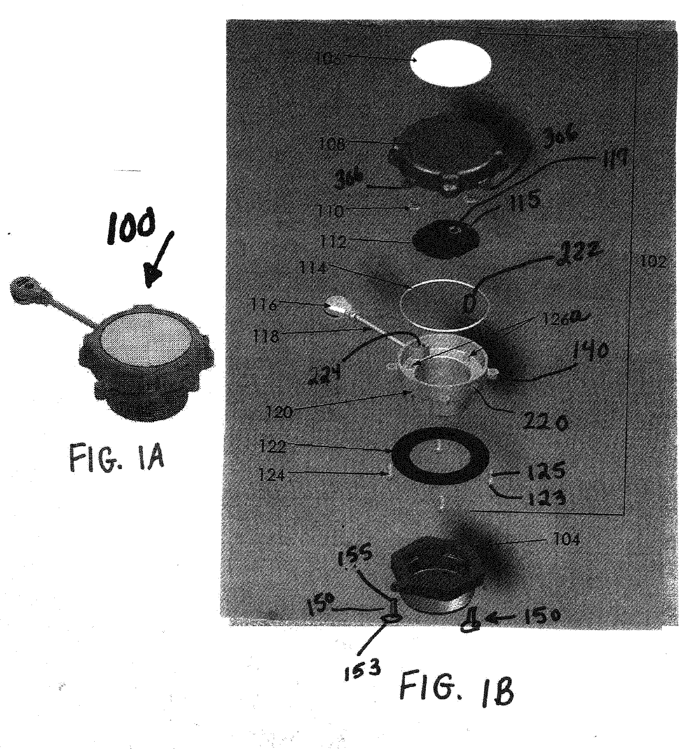

Turning to Figs. 1A and 1B, depicted are assembled and exploded views of a sensor apparatus 100 in accordance with one embodiment of the present invention. The sensor apparatus 100 is especially suitable for enabling easy, reliable, and safe attachment of a monitoring apparatus (for example, sensor assembly 102) to the fill port 300 of an asset (e.g., a liquid tank 304), for easy removal of the sensor assembly 102 from adaptor 104 and/or the asset aperture to permit filling of the tank 304 with liquid fuel through the entry or fill port 300, and for subsequent quick and easy re-attachment of the sensor assembly 102 to the tank 304. Apparatus 100 includes a sensor assembly 102 (in the form of a threadable cap) and an adaptor 104. Although the depicted embodiment shows sensor assembly 102 as a threadable cap, sensor assembly may have varying shapes and/or attachment mechanism without departing from the scope hereof.

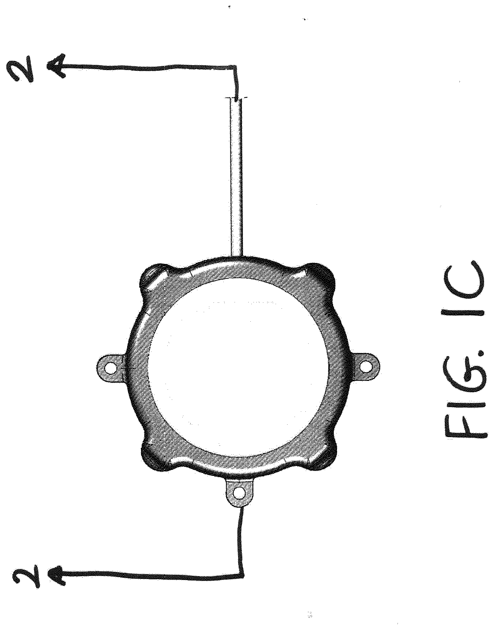

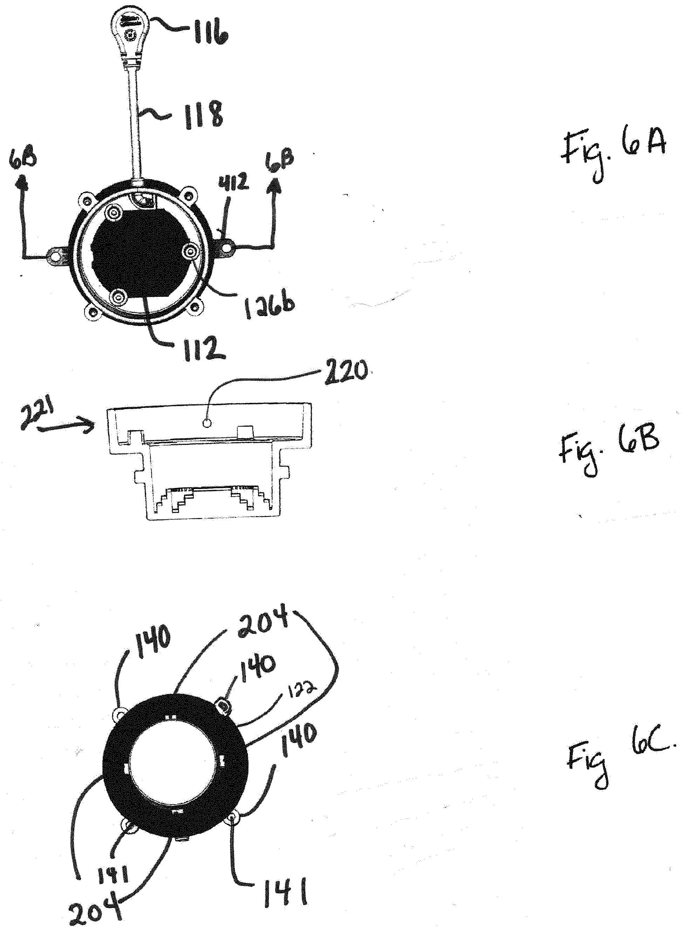

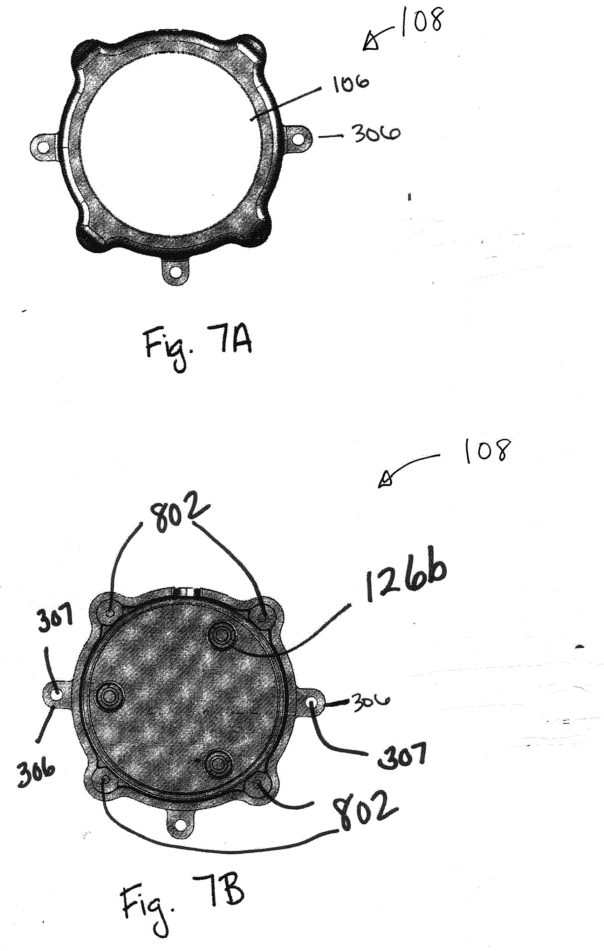

As seen in the exploded view, sensor assembly 102 includes label 106, upper body section 108, one or more internal seals 110, sensor 112, housing seal 114, plug 116, cabling 118, lower body section 120, external seal 122, fasteners 124, and vented membrane 122. The components of sensor assembly 102 are held together within the housing created by lower body section 120 and upper body section 108. The upper body section 108 and lower body section 120 are secured to each other by one or more fasteners 124, such as screws, however, alternate fasteners may be substituted without departing from the scope hereof. In the depicted embodiment, fasteners include a fastener head 123 and fastener body 125 (Fig. 1). Fastener head 123 has a larger diameter than the tab aperture 141 of tabs 140. Tabs 140 are located on the external surface of the lower body section 120 (Fig. 6C). Fastener body 125 is substantially cylindrical and has a smaller diameter than tab aperture 141. A first end of fastener body 125 is attached to fastener head 123, and a second end of fastener body 125 is threaded. The second threaded end is passed through tab aperture 141 and inserted into a compatibly threaded upper body section aperture 802 located on the underside of the upper body section 108 (Fig. 7B). The tightening of fasteners 124 into apertures 802 joins the upper body section 108 to lower body section 120. The removability of fasteners 124 facilitates maintenance of sensor assembly 102, however, alternate removable and nonremovable fasteners are envisioned including, without limitation, adhesives, and threading (that allows upper body section 108 to be threaded to lower body section 120 or vice versa).

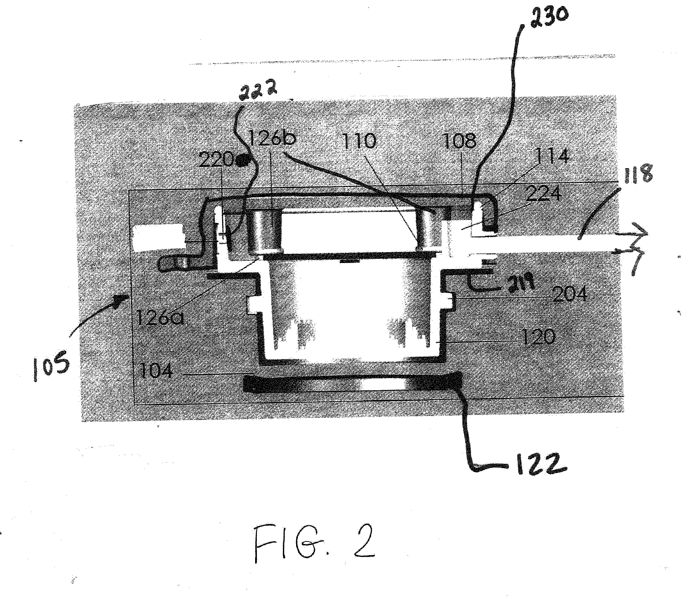

Housing seal 114 seals the attachment point between lower body section 120 and upper body section 108 as shown in Fig. 2. When fasteners 124 are fastened, it draws lower body section 120 and upper body section 108 together, thereby compressing housing seal 114. The housing seal 114 provides a protective seal that isolates the contents of the protective housing against external contaminants. In some embodiments, housing seal 114 is an O-ring, but alternate seals may be substituted without departing from the scope hereof.

In the embodiment depicted in Fig. 2, the upper body section 108 overhangs the upwardly facing surface 230 of lower body section 120 for added protection against water and other contaminant ingress. The upper body section 108, as shown, is approximately 0.75 inches and is constructed of a high impact resistance, chemical resistant, lightweight polycarbonate material with an ultraviolet ("UV") radiation inhibitor to increase its durability for outdoor use. The lower body section 120 (and the adapter 104) is constructed of high-density polyethylene such that it is lightweight, resistant to chemicals, and has good tensile strength. However, other material may be substituted.

In the depicted embodiment, upper body section 108 optionally includes one or more labels 106, affixed to the top of the upper body section 108. (Fig. 7A) These labels may provide information to a user such as, but not limited to, manufacturer, product number, service phone number, etc.

Sensor assembly 102 also includes a sensor 112. Sensor 112 is a sensor for monitoring and/or detecting properties of the contents of a container, such as fill level. Sensor 112 is capable of monitoring and/or measuring one or more parameters of contents contained within asset 304. Such parameters may include the amount, volume, or level of liquid within the tank. The parameters may also include time information, temperature information, pressure information, and the like. Various sensors may be used to accommodate different containers and mediums. In some embodiments, sensor assembly 102 may include a radar level sensor, but the invention is not so limited. Also, sensor 112 may be a non-contact sensor, but is not so limited. Also, in some embodiments, sensor 112 includes a circuit board with a processor integral to the sensor or in addition to the sensor. When sensor 112 includes a circuit board, other chips may be included such as, but not limited to, an accelerometer programmed to detect orientation, a GPS or other location coordinate device, and combinations thereof. Sensors based upon non-radar technology may be substituted without departing from the scope hereof including, but not limited to, sensors based upon the following technology: electromagnetic, ultrasonic, optical, pressure, and combinations thereof.

The sensor assembly or sensor 112 may further contain electronic communication circuitry, such as a Radio Frequency (RF) transmitter and/or receiver, to send communication signals to a remote device or facility pertaining to the tank parameters. The circuity may also be based on Satellite, Cellular, Bluetooth, or other communication means.

Further, sensor 112 may be connected, via the cabling 118 with the plug 116, where the plug may be connected with various external devices, such as local or remote monitors, for purposes such as data input/output.

The sensor assembly 102 may also contain a power supply (e.g., batteries) to provide power to the components thereof or the components are powered through cabling 118 and plug 116, which may be connected to a power source (e.g., batteries, solar panel, etc.).

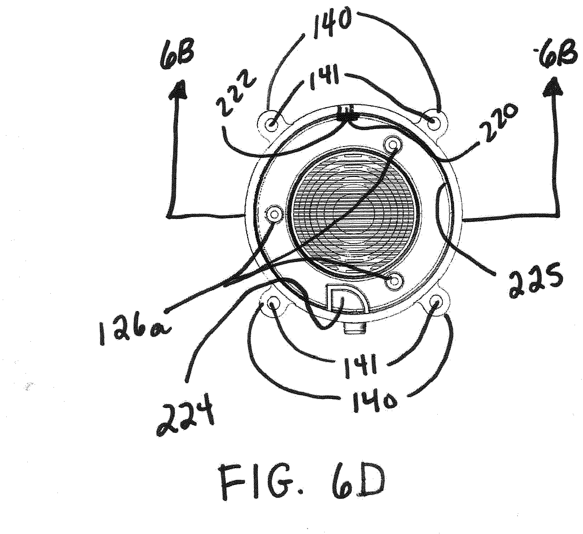

Turning to Fig. 2, depicted is a cross-sectional view of the assembled sensor assembly 100. As seen in Figs. 2B and 6B, lower body section 120 includes a vent 220, which is an aperture passing through the upper end 221 of lower body section 120. As best seen in Fig. 6D, in the depicted embodiment, vent 220 is located on an approximately equal vertical elevation as cabling channel 224, but on the opposite side of lower body section 120. In some embodiments, vent 220 is sealed by vent membrane 222, which is located on the portion of the inside wall 225 of lower body section 120 that surrounds vent 220. Vent 220 provides for protection of the sensor 112 and other components of sensor apparatus 100 against liquids and other contaminants, while allowing pressure equalization between the interior of the sensor assembly and the external environment. In the depicted embodiment, vent membrane 222 is manufactured of Polytetrafluoroethylene (PTFE) and is secured to the interior wall of lower body section 120 via an adhesive. However, that membranes of varying material and methods of attachment may be substituted without departing from the scope hereof.

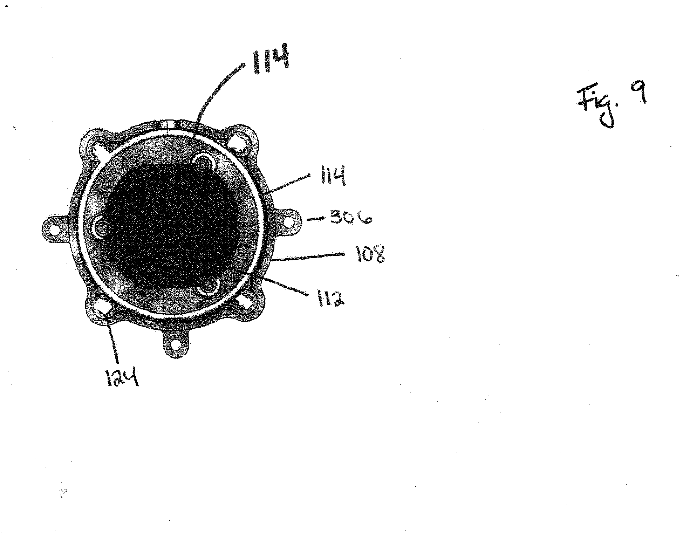

As also seen in Figs. 1B, 2, and 6D, lower body section includes lower support posts 126a which are designed to mate with upper support posts 126b of upper body section 108 (Fig. 2, 6A, 6D, 7B, and 9) in an interlocking manner to provide stabilization of the upper body section 108 relative to lower body section 120 and to guard against movement therebetween including, but not limited to, rotational movement. Additionally, the interlocking lower support posts 126a and upper support posts 126b pass through insets 115 (Fig. 1B) in the sensor 112, thereby holding the sensor 112 in place and minimizing movement thereof. In the depicted embodiment, lower support post and upper support post are cylindrical and insets 115 are semicircular, however, alternate shapes and sizes may be substituted without departing from the scope hereof.

Internal seals 110 are disposed about the lower support posts 126b (Fig. 1B, 2) and, when the upper body section 108 is fastened to the lower body section 120, the seals 110 deform under the pressure exerted by the upper body section 108, against the lower body section 120, providing shock-resistant, deformable support for the sensor board 112. The internal seals 110 may also provide for mechanical damping and stabilization of the sensor board 112 within the housing 105 formed by upper body section 108 and lower body section 120. In an embodiment, the internal seals 110 may be oil-resistant O-rings made from a material such as, for example, nitrile rubber.

As shown in Figs. 1B, 2, and 6D, cavity 224 is included in lower body section 120 to provide a protective housing for passage of the cabling 118 through the lower body section 120 adjacent sensor 112. In an embodiment, the cavity 124 may be potted, providing for isolation of the internal components of the assembly 100 against external contaminants, such as liquids and vapors. The cavity 124 may be potted with one or more compounds, such as urethane-based potting compounds, to seal the cavity and prevent moisture from penetrating into the housing.

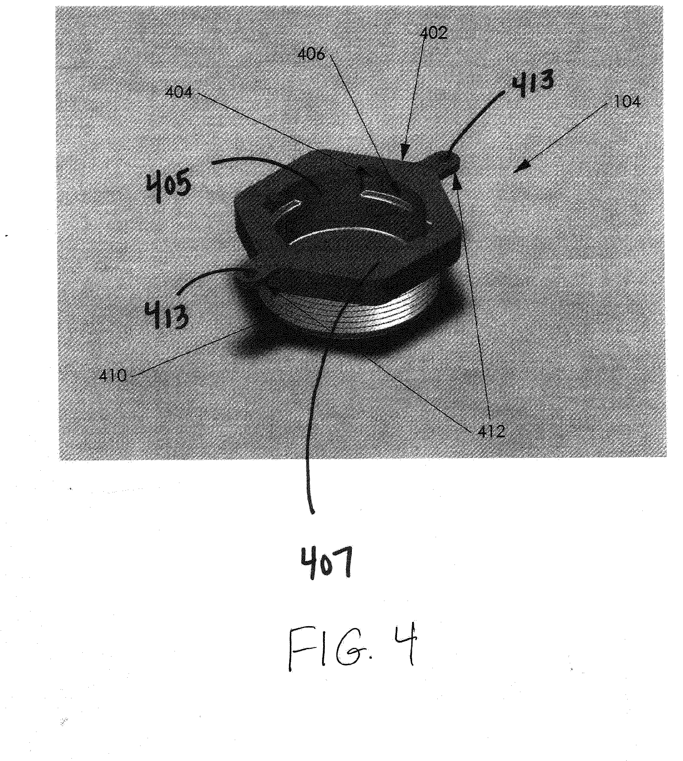

Significantly, as seen in Figs. 2 and 6C, lower body section 120 has a predetermined configuration for mating with the adapter 104. The exterior of lower body section 120 has four protrusions 204, which are configured for mating with the vertical channels 404 and horizontal channels 406 of the slots 402 of adaptor 104 (Fig. 4 - 5B), although a varying quantity of one or more protrusions may be substituted without departing from the scope hereof. In the depicted embodiment, protrusions 204 are substantially rectangular, but other shapes and sizes may be substituted including, but not limited to, cylindrical and square. The lower body section 120 and protrusions 204 thereof mate with corresponding features of the adaptor 104, described below, to facilitate quick, easy, secure, and safe connection and disconnection of the sensor assembly 102 with the adaptor 104.

Figs. 4 - 5B depict one embodiment of an adaptor 104 of the present invention. The adaptor 104 has a generally circular, tubular configuration for mating with the circular fill port 300 of a tank or container 304. The adaptor 104 is constructed of high-density polyethylene, but alternate materials may be substituted without departing from the scope hereof so long as such materials are compatible with the contents of the asset. The outside, bottom surface 410 of the adaptor is threaded for mating with the threaded tank port 300. For example, in the embodiment shown, the exterior surface 410 has two (2.0) inch male National Pipe Threads (NPT). However, the exterior surface 410 may be modified to mate with an alternative tank 304 port 300. For example, the exterior surface could be 1.5-inch NPT, 2.0-inch British Standard Pipe (BSP) threads, Buttress threads, or other connection means.

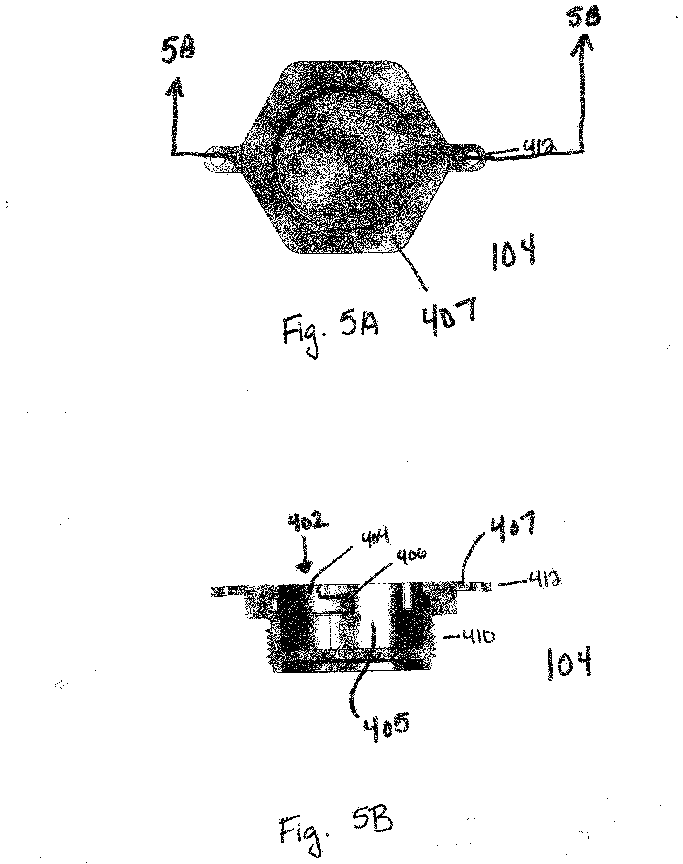

As is best shown in Fig. 4 and 5B, the interior of the adaptor 104 has a plurality of slots 402 that are disposed around the interior wall 405 of the adaptor. The slots 402 have an L-shaped configuration with a vertical channel member 404 and a horizontal channel 406. The channels 404/406 of slots 402 are positioned and sized to accept the protrusions 204 of the lower body section 120, allowing the sensor assembly 102 to be connected to the adaptor 104 with a twisting motion as described in greater detail below. External seal 122 may be positioned between the downwardly facing head surface 219 of lower body section 220 and the upwardly facing surface 407 of adaptor 104. The adaptor 104 may be sized to create a seal in an existing asset aperture such as a 2" oil drum bunghole either alone or in combination with sensor assembly 102.

Although the adapter 104 has been shown and described as a male type threaded connection member for connection to a female type threaded connection of a port 300 of a tank 304, it is within the purview of the invention that alternative adapter configurations and arrangements may be used for other containers and access ports. Further, it is within the purview that the adapter 104 can be modified to be a bracket or other mounting method provided it uses a universal interlock mechanism utilizing the protrusion and slot arrangement of the adapter.

As shown in Fig. 4, adaptor 104 includes one or more adaptor tabs 412, which each include an adaptor tab aperture 413. Upper body section 108 also includes upper body section tabs 306, which each include an upper body section tab aperture 307. When the adaptor is aligned properly with the upper body section or the sensor assembly 102 as a whole, a fastener 150 may be passed through each adaptor tab aperture 413 and an aligned upper body section tab aperture 307 of an upper body section tab 306 (Fig. 1B, 7B) to secure the adaptor to upper body section 108, and the sensor assembly 102 as a whole. This provides for tamper evidence if needed. The passage of each fastener through the corresponding adaptor tab 412 provides for greater stability of the protective housing within the adaptor and allows the protective housing to be permanently or removably attached to the adaptor. In the depicted embodiment, the adaptor 104 includes two adaptor tabs 412 and the upper body section includes three upper body section tabs 306, but alternate quantities may be substituted without departing from the scope hereof.

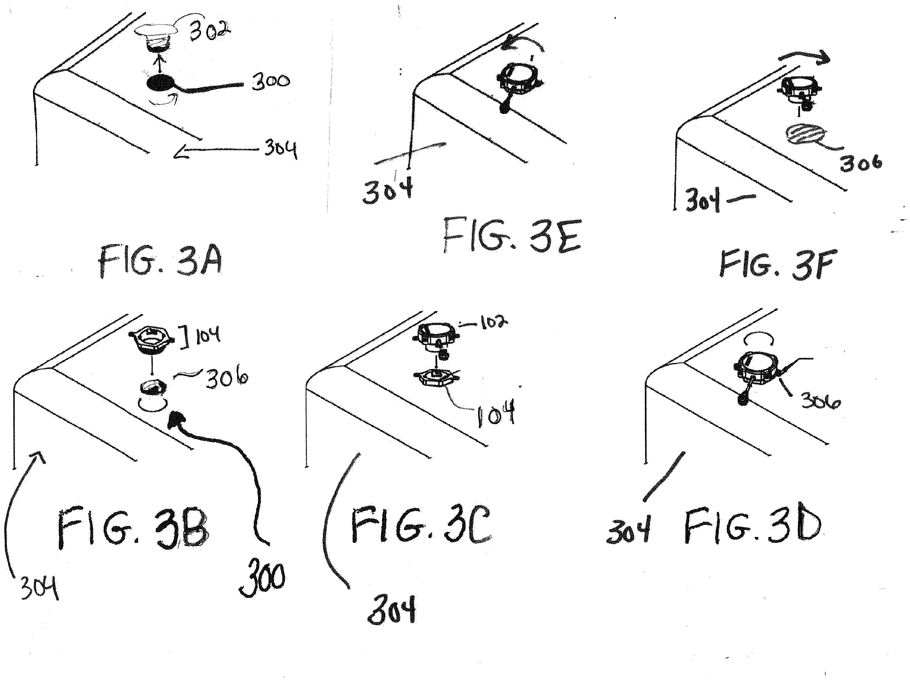

Turning to Figs. 3A-3D, depicted is a method of installing a sensor apparatus and subsequent removal and re-installation of the sensor assembly in accordance with one embodiment of the present invention. The sensor apparatus 100 may be used, for example, with an asset which holds liquids, such as liquid tank 304. A typical tank 304 has a port 300 for ingress of liquids to the interior of the tank. The sensor assembly of the present invention may be installed on such a port 300, with or without an adaptor such as adaptor 104. Adaptor 104 can be installed in port 300 with or without a sensor assembly. The sensor apparatus 100 of the invention permits fast, easy, secure, and safe removal of the adaptor from the port 300 so that liquids may be introduced to the tank 304, or removal of liquids should the need arise. The system 100 also permits fast, easy, secure, and safe reconnection of the sensor assembly 102 to the adaptor 104 before and after filling of the tank or at any other time (for example, for maintenance).

As shown in Fig. 3A, the method begins at step 1002 with removing any existing inserts 302 from the asset opening 306 (if the insert is not compatible with the sensor assembly 102 of the present invention). The insert may include, but is not limited to, a tank cap.

Next, at 1004, a sensor assembly-compatible adaptor 104 is installed in the asset opening as shown in Fig. 3B. Adaptor 104 may be attached to port 300, for example, by engaging the threaded portion 410 of the adaptor 104 to the threaded interior of the port 300 and rotating the threaded adaptor 104 until the adaptor is securely fastened to the tank 304.

Next, as seen in Fig. 3C, the sensor assembly 102 is coupled to the adaptor 104 at step 1006 by aligning the protrusions 204 of sensor assembly 102/lower body section 120 to the vertical channels 404 of the slots 402 of adaptor 104. Thereafter, protrusion(s) 204 are inserted into the corresponding vertical channels 404 until a point at which the protrusion(s) 204 are aligned with a respective horizontal channel 406. Next, sensor assembly 102 is rotated clockwise until the protrusions 204 are no longer aligned with vertical channels 404, thereby locking the protrusions 204 within the horizontal channels 406 such that a vertical movement will not release the sensor assembly. In this manner, sensor assembly 102 is connected to adaptor 104. As such, the sensor assembly 102 couples to adaptor 104 in a manner that seals port 300 of asset 304.

Optionally, prior to coupling sensor assembly 102 to adaptor 104, an external seal 122 may be placed below the downwardly facing surface 219 of lower body section 120 at optional step 1006 such that it is sandwiched between the upwardly facing surface 407 of adaptor 104 and the downwardly facing surface 219 of lower body section 120 when sensor assembly 102 is coupled to adaptor 104.

Thereafter, as shown in Fig. 3D and at step 1010, the one or more protrusions 204 of sensor assembly 102 are rotated through the horizontal channel(s) 406 until the one or more adaptor tab(s) 412 are aligned with one or more upper body section tabs 306. Once aligned, a fastener 150 may be passed through each set of aligned apertures and secured thereto to hold the sensor assembly in place relative to the adaptor.

Once installed, at step 1012 and as shown in Fig. 3E, the sensor apparatus 100 as a whole may be removed from the tank by simply rotating the entire apparatus, including the sensor assembly 102 and adaptor 104, counterclockwise. This may be required, for example, to fill the tank 304. Thereafter, at step 1014, the sensor apparatus may be reinstalled by simply rotating the entire apparatus clockwise into the existing aperture 306 as shown in Fig. 3F.

Although the apparatus/method has been described in connection with the field of fuel tanks, it can readily be appreciated that it is not limited solely to such field, and can be used in other fields including, but not limited to any field utilizing liquids stored in tanks or other containers.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. A system compatible with an aperture of an asset, the apparatus for monitoring the contents of an asset, the system removable from the aperture, comprising:
a housing including at least one first connection interface on an exterior surface of the housing;
a sensor contained within the housing;
a lens contained within the housing;
a power supply coupled to the sensor;
an adaptor, the adaptor including at least one second connection interface configured to removably, lockably mate with the at least one first connection interface, the adapter including a bottom end removably connectable with the aperture of the asset, wherein the aperture of the asset is substantially sealed upon insertion of the bottom end therein.

2. The system according to claim 1,
wherein the first connection interface includes at least one protrusion;
wherein the second connection interface includes at least one slot, each of the at least one slot including a vertical channel connected to a horizontal channel, the vertical channel passing through an upwardly facing surface of the adaptor, the horizontal channel arranged substantially perpendicular to the horizontal channel, the vertical channel and the horizontal channel sized to allow the at least one protrusion to pass therethrough; and
wherein the at least one security tab quantity equals the at least one slot quantity.

3. The system according to claim 1 or 2, wherein the housing is fluid-sealed.

4. The system according to claim 1, 2 or 3, further comprising:
a vent penetrating a wall of the housing; and
a vent membrane covering the vent.

5. The system according to any preceding claim, wherein the sensor is a non-contact sensor, a level sensor, a fluid-level sensor, or a combination thereof.

6. The system according to any preceding claim, wherein the housing includes a cable channel.

7. The system according to any preceding claim, wherein the housing is formed by an upper body section and a lower body section coupled together by at least one fastener.

8. The system according to any preceding claim, wherein the housing includes a closed bottom end and the adapter includes either a closed bottom end or an open bottom end.

9. The system according to any preceding claim, further comprising:
a cable assembly, which preferably comprises:.
a flexible cable; and
a connector.

10. The system according to any preceding claim, wherein the bottom end of the adaptor includes threads.

11. The system according to any preceding claim, wherein the sensor is a non-contact sensor that is at least one of: an electromagnetic sensor, an ultrasonic sensor, a pressure sensor, and a radar sensor.

12. A method of monitoring the contents of an asset comprising the steps of:
installing an adaptor in an asset aperture;
installing a sensor assembly into the adaptor; and
fastening the sensor assembly to the adaptor to create a sensor apparatus.

13. The method according to claim 12, further comprising:
removing the sensor apparatus as a single unit from the asset aperture.

14. A method according to claim 12 or 13, wherein the installing a sensor assembly into the adaptor further comprises the steps of:
aligning at least one protrusion of the sensor assembly with at least one vertical channel of the adaptor;
inserting the at least one protrusion into the at least one vertical channel of the adaptor until the at least one protrusion is aligned with one of at least one horizontal channel of the adaptor;
rotating the sensor assembly to move the at least one protrusion through the one of the at least one horizontal channel to a position in which the at least one protrusion is no longer aligned with the at least one vertical channel.

15. A method according to any one of claims 12 to 14, further comprising the steps of:
rotating the at least one sensor assembly until at least one sensor assembly tab of the sensor assembly aligns with at least one adaptor tab of the adaptor;
fastening the at least one sensor assembly tab to the at least one adaptor tab.
